Europäisches Patentamt

European Patent Office

Office européen des brevets

(11) Veröffentlichungsnummer: **0 373 478**
**A2**

(12) **EUROPÄISCHE PATENTANMELDUNG**

(21) Anmeldenummer: 89122363.8

(22) Anmeldetag: 05.12.89

(51) Int. Cl.⁵: **G02B 6/44, H02G 15/18, H02G 15/10**

(30) Priorität: 16.12.88 DE 3842521

(43) Veröffentlichungstag der Anmeldung:
**20.06.90 Patentblatt 90/25**

(84) Benannte Vertragsstaaten:
**AT CH DE FR GB IT LI NL SE**

(71) Anmelder: **RXS Schrumpftechnik-Garnituren GmbH**
**Profilstrasse 4**
**D-5800 Hagen 1(DE)**

(72) Erfinder: **Schilling, Werner, Dipl.-Ing.**
**Armin-Nass-Strasse 15 a**
**D-8632 Neustadt(DE)**

(74) Vertreter: **Fuchs, Franz-Josef, Dr.-Ing. et al**
**Postfach 22 13 17**
**D-8000 München 22(DE)**

(54) **Längsgeteilte Muffe für Lichtwellenleiterkabel.**

(57) Bei der Erfindung handelt es sich um eine längsgeteilte Muffe (1) für Lichtwellenleiterkabel (15) mit Anordnungen zur Unterbringung von Lichtwellenleiterüberlängen, bestehend aus einer flexiblen Folie (4), vorzugsweise aus mehreren Verbundschichten, und aus Stützkörpern (3, 9) die innerhalb der zur Muffe (1) gefalteten Folie (4) angeordnet sind. Die Lichtwellenleiterüberlängen (16) können entweder in Formausschnitten (10) der Stützkörper (9) oder in separaten Spleißkassetten (14) fixiert werden.

FIG 1

## Längsgeteilte Muffe für Lichtwellenleiterkabel.

Die Erfindung betrifft eine längsgeteilte Muffe für Lichtwellenleiterkabel mit Anordnungen zur Unterbringung von Lichtwellenleiterüberlängen.

Die Verbindung von Lichtwellenleiterkabeln erfordert bei Kabelaußendurchmessern, die im Vergleich zu herkömmlichen Kupferkabeln deutlich kleiner sind, wegen der Aufnahme von Spleißhilfsmitteln für den Lichtwellenleiter relativ große Spleißräume. Konventionelle Muffen, die bisher für die Kupferkabel verwendet wurden, und die zur Zeit auch für Lichtwellenleiterkabel eingesetzt werden, weisen in der Abdicht- bzw. Durchführungszone und dem Volumen der Muffe selbst ein für Lichtwellenleiterkabel ungünstiges geometrisches Verhältnis auf. Der neuen Technik entsprechend, befassen sich die Muffenkonstruktionen im wesentlichen auf die Ausgestaltung des Muffeninneren bezüglich der darin unterzubringenden Spleißträger und Elemente zur Verbindung der Lichtwellenleiter. Dabei sind im wesentlichen die bisherigen Muffenkonstruktionen an sich übernommen worden, obwohl sie keine optimale Lösung darstellen. Solche Anpassungen beziehen sich beispielsweise auf Halterungen für Schutzhüllen zur Aufnahme von Lichtleitfaservorratslängen, wie sie in der deutschen Offenlegungsschrift 32 36 213 beschrieben sind. Doch ist es recht ungünstig, derartige Zusatzkonstruktionen in bereits vorhandene Muffentypen einzusetzen.

So liegt dieser Erfindung die Aufgabe zugrunde, eine längsgeteilte Muffe für Lichtwellenleiterkabel zu schaffen, die sich optimal für die Belange der Lichtwellenleiterkabeltechnik und deren Spleißvorrichtungen eignet. Dabei soll zum Zwecke der Änderungen in der Spleißanordnung bzw. Spleißzuordnung oder für Reparaturen eine schnelle Zugänglichkeit zum Spleißraum gewährleistet sein, ohne daß der Abdichtungs- bzw. Druchführungsbereich für die Lichtwellenleiterkabel berührt wird. Dies bedeutet, daß die Muffe bei derartigen nachträglichen Zugängen nicht total geöffnet werden soll, wobei das teilweise Öffnen nur mit handelsüblichen Hilfsmitteln oder auch ohne solche möglich sein soll. Im übrigen soll die Muffe wie üblich wasser- und staubdicht verschlossen sein. Die gestellte Aufgabe wird nun mit einer längsgeteilten Muffe der eingangs erläuterten Art dadurch gelöst, daß sie aus einer flexiblen Folie, vorzugsweise aus mehreren Verbundschichten, besteht, daß Stützkörper innerhalb der zur Muffe gefalteten Folie angeordnet sind und daß die Stützkörper innerhalb der Muffe Aufnahmen für die Lichtwellenleiterüberlängen aufweisen.

Die Vorteile gemäß der Erfindung sind nun darin zu sehen, daß aufgrund der flexiblen Folie und der Ausgestaltung des eigentlichen Muffenraumes die Möglichkeit besteht, die Muffe nur im eigentlichen Muffenbereich zu öffnen und dabei die jeweiligen Kabeleinführungsbereiche im geschlossenen Zustand zu belassen. Dies bedeutet, daß für eventuelle Reparatur- oder Rangierarbeiten der Muffenraum zugänglich gemacht werden kann, wobei die Dichtungsbereiche unberührt bleiben, so daß die Montagearbeiten wesentlich erleichtert werden. Im übrigen ist es darüber hinaus jedoch auch möglich, nachträgliche Einführungen von Kabeln und zusätzlichen Spleißträgern vorzunehmen. Außerdem kann eine solche Konstruktion den leichten und relativ dünnen und flexiblen Kabeln eines solchen Netzes artgerecht und variabel angepaßt werden.

Die Gestaltung des Muffenkörpers basiert wesentlich auf der Verwendung eines flexiblen Verbundmaterials geringer Dicke aus Polyethylen- und Stahlfolien sowie gegebenenfalls damit laminierter Glasgittergewebe als Verstärkungen. Die aus Meter-Ware oder auch aus Formatstücken zum Beispiel über Laserschneidmaschinen zurechtgeschnittenen, flächensymmetrischen Folienabschnitte für Muffenkörper erhalten eine äußere Kontur, die der Ausbildung des zu umhüllenden Spleißraumes angepaßt wird. Die Symmetrielinie des Zuschnittes ergibt dabei die Basislinie für die Muffe, das heißt die darauf senkrecht stehende Ebene ist in aller Regel die Symmetrieebene für die fertig geformte Muffe. Dabei ist die zum Muffeninneren zugewandte Seite des Verbundmaterials grundsätzlich mit einer haftvermittelnden Schicht, vorzugsweise aus Copolymeren, versehen. Diese wird in bestimmten Abständen mit vorzugsweise stranggepreßten, mit einer besonderen Formgebung versehenen, gegliederten Profilen beklebt. Diese Profile dienen im Kabeleinführungsbereich zur Aufnahme von dauerplastischer Dichtungsmasse, die in Blockstreifenform in die aus den profilierten Stützkörpern gebildeten Kammern eingelegt wird. Beim Schließen, das heißt, beim Zusammenfalten der flexiblen Folie über die quer zu den Blockstreifen gelegten Lichtwellenleiter wird die dauerplastische Masse in die Hohlräume verpreßt, so daß erzeugt so eine wasserdichte Absperrung erzeugt wird. Die gegliederten und mit Formausschnitten versehenen Stützkörper legen sich beim Schließvorgang dicht aneinander, so daß die dauerplastische Dichtungsmasse nur in geringem Umfang austreten kann. Auf diese Weise wird beim Zusammenfalten der flexiblen Folie gleichzeitig eine Art Dichtungskammer in den Kabeleinführungsbereichen geschaffen.

Die profilartigen Stützkörper im Mittelbereich der Muffe dienen zur Stützung des Verbundmaterials, das heißt der flexiblen Folie, wobei die Abstützung durch die gegliederten Seitenwangen erzielt wird, die dafür entsprechend breit ausgelegt sind. Diese Stützkörper erhalten neben der für die Flexibilität notwendigen Gliederung durch die Formausschnitte auch weitere Formausschnitte, die zur Aufnahme der Lichtwellenleiteradern oder von Lichtwellenleiterkassetten dienen. Dabei erhält besonders der Basisbereich entlang der Symmetrielinie Aussparungen, die als Klemmmechanismen ausgebildet sind und der Aufnahme von Spleißträgern dienen. Die Erstmontage der Muffe, das heißt die Festlegung des eingeführten Lichtwellenleiterkabels in den Kabeleinführungsbereichen, sowie die Plazierung der Lichtwellenleiteradern in den vorher bereits genannten Formausschnitten der Stützkörper im Mittelbereich der Muffe und die Fixierung der Halterungen für Spleißträger erfolgt am flächig ausgebreiteten Muffenhüllkörper, der flexiblen Folie, die praktisch als Arbeitsunterlage dient. Dies hat den Vorteil, daß das Arrangement von Adern, Minibündeln und Fasern vom Beginn der Montage bis zum Verschließen des Muffenhüllkörpers voll eingesehen und im Bedarfsfall leicht korrigiert werden kann. Die einzuführenden Lichtwellenleiterkabel werden für den Schließvorgang in den oben genannten dauerplastischen Blockstreifen, der jeweils über das Stützprofil der Stützkörper hinausragt, zu ca. 4/5 ihrer Durchmesser darin eingedrückt und beispielsweise mit angepaßten Drahtbügeln fixiert. Die Drahtbügel verbleiben im Dichtungsmaterial. Die Lichtwellenleiteradern verlaufen im Inneren der Kabelmuffe gewissermaßen in einer dreidimensionalen Raumkurve. Bei Verwendung von Spleißkassetten werden gemäß der Erfindung der Leichtbauweise der Muffe angepaßte Ausführungsformen verwendet, wobei ermöglicht wird, daß diese auch im Fall einer nur teilweisen Öffnung der Muffe zugänglich sind. Zu diesem Zweck werden die Verschlußelemente nur im Bereich des eigentlichen Muffenaufnahmekörpers gelöst und dann werden - bei noch geschlossenen Kabeleinführungsbereichen - die flexiblen Wandungen des Muffenhüllkörpers nach außen gebogen. Nach dieser Maßnahme ragen die einzelnen Spleißkassetten aus der noch verschlossenen Zone heraus, wobei die Konstruktion der Spleißkassetten so ausgeführt ist, daß die darin enthaltenen Spleißträger herausgezogen werden können. Nach erfolgter Reparatur oder Korrektur des Spleißbereiches wird der Spleißträger in seine Spleißkassette zurückgeführt und die Muffe kann wieder geschlossen werden.

Die Erfindung wird nun anhand von zwölf Figuren näher erläutert.

Die Figur 1 zeigt die erfindungsgemäße, längsgeteilte Kabelmuffe im aufgeklappten Zustand.

Figur 2 zeigt die Kabelmuffe im geschlossenen Zustand.

Die Figur 3 zeigt eine Einzelheit der Stützkörper im Kabeleinführungsbereich.

Die Figur 4 zeigt eine Einzelheit im Verschlußbereich der Kabelmuffe.

Die Figur 5 zeigt die teilweise geöffnete Kabelmuffe.

Die Figur 6 zeigt einen Spleißträger für die eingeführten Lichtwellenleiter, der in einer Spleißkassette eingeführt ist.

Die Figur 7 zeigt die Einführung eines Lichtwellenleiterkabels in einen Spleißträger.

Die Figur 8 verdeutlicht den Mechanismus zum Herausziehen eines Spleißträgers.

Die Figur 9 zeigt ein erstes Beispiel für eine flexible Folie.

Die Figur 10 zeigt ein zweites Beispiel für eine flexible Folie.

Die Figur 11 zeigt ein drittes Beispiel für eine flexible Folie.

Die Figur 12 zeigt ein viertes Beispiel für eine flexible Folie.

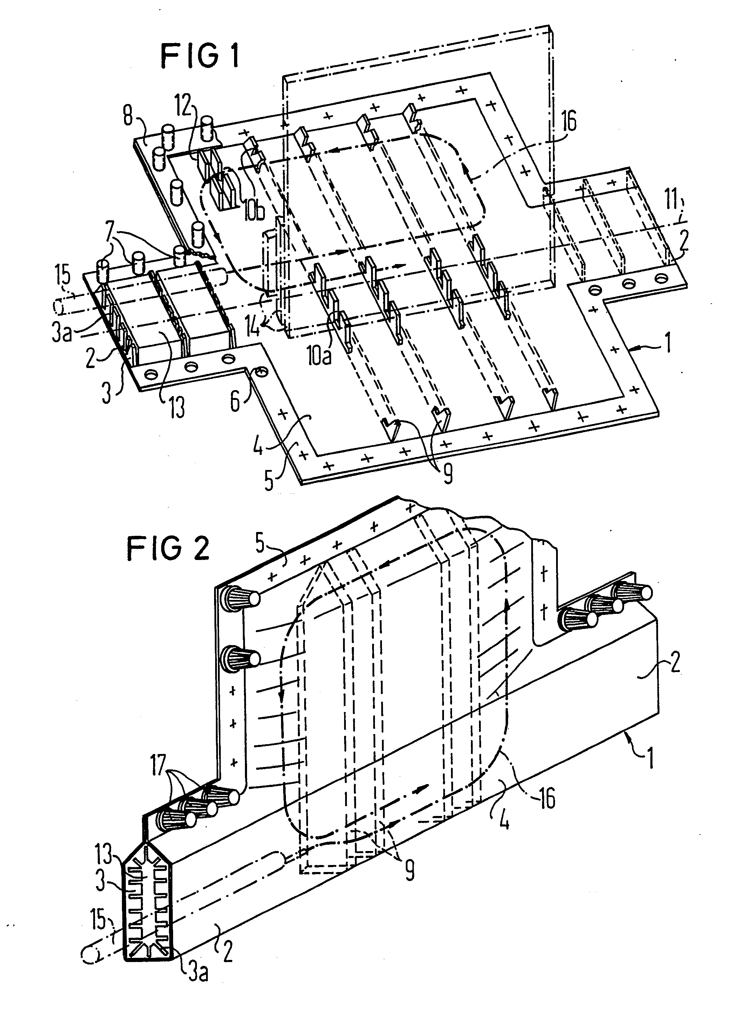

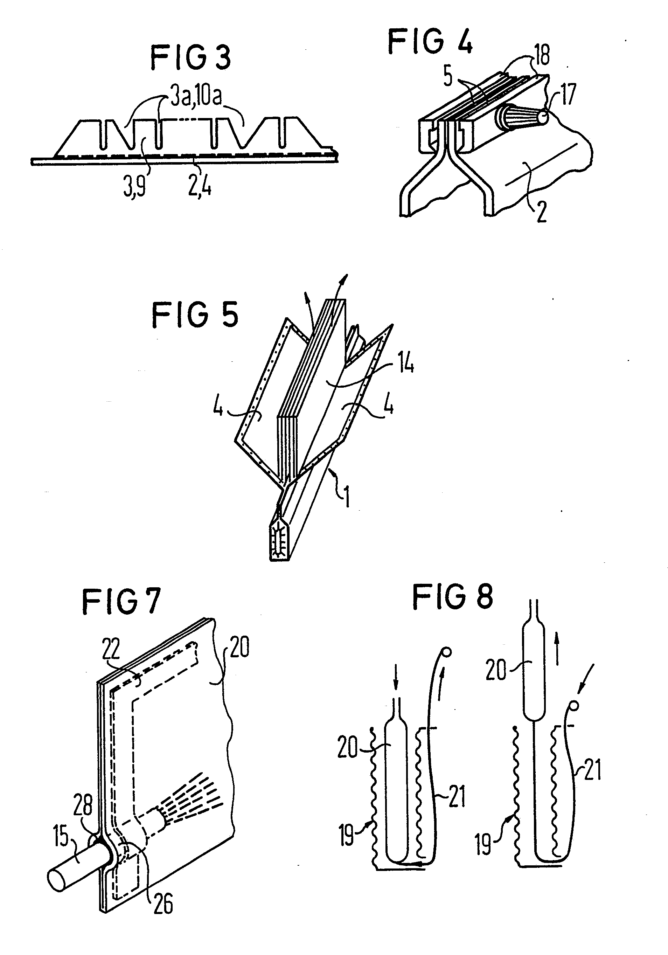

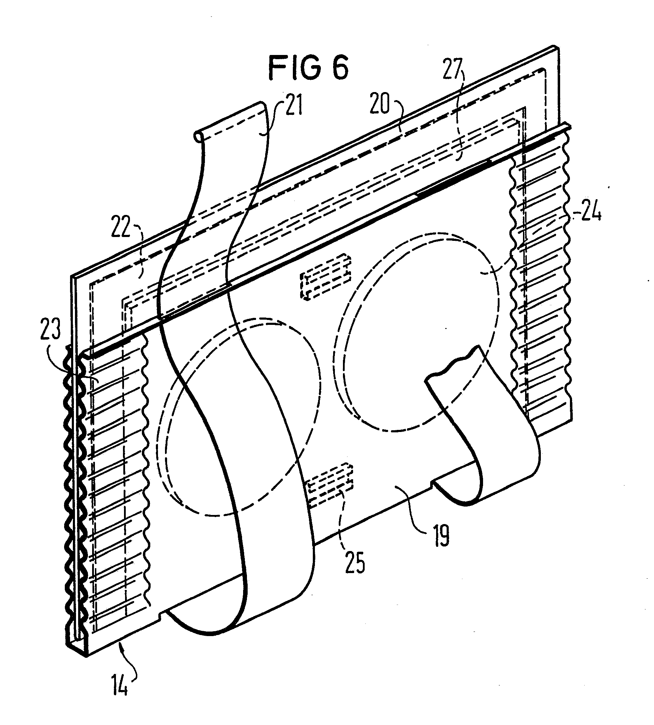

Die Figur 1 zeigt die längsgeteilte Muffe 1 für Lichtwellenleiterkabel 15, wobei aus dieser Darstellung hervorgeht, daß sie zum Beispiel zwei stirnseitige Kabeleinführungsbereiche 2 besitzt, zwischen denen der eigentliche Muffenaufnahmebereich mit großem Fassungsvermögen angeordnet ist. Die Kabeleinführungsbereiche 2 werden aus mindestens zwei, hier drei, Reihen von profilierten Leisten 3 gebildet, die im Abstand voneinander quer zur Mittelachse 11 der Muffe 1 auf der die Muffenwandung bildenden Folie 4 fest angeordnet sind. Durch diese profilierten Leisten 3 werden im Kabeleinführungsbereich 2 gewissermaßen Kammern gebildet, in welche Dichtungsmaterial 13, vorzugsweise plastische Bitumendichtmasse, eingelegt wird. Die Höhe dieses Blockstreifens aus Dichtungsmaterial 13 ist größer als die Höhe der profilierten Leisten 3 und zwar so, daß die einzuführenden Kabel zu ca. 4/5 ihres Durchmessers bei der Vormontage darin eingedrückt werden können. Die profilierten Leisten 3 besitzen nun entsprechende Formausschnitte 3a, die so gestaltet sind, daß sich beim Zusammenfalten der flexiblen Folie 4 zur Muffe ein geschlossener Einführungsblock bildet, wie die Figur 2 verdeutlicht. Dabei muß die flexible Folie 4 in diesen Kabeleinführungsbereichen 2 mit Vorspannung über die eingelegten Kabel gepreßt werden, damit das Dichtungsmaterial 13 die nach der Vormontage verbliebenen Lücken ausfüllt. Um einen linienförmigen Übergangsbereich zwischen der Folie 4 und den Verschlußstreifen der Kabeleinführungsbereiche 2 zu erhalten, werden hier die verschlußelemente 6 und 7 mit starren Verschlußstegen 18 unterlegt, wie aus der Figur 4 näher hervorgeht. Der übrige Verschlußstreifen 5 ist mit einer Vielzahl von Verschlußelementen, zum Beispiel mit unverlierbaren Schraubbolzen 7 und korrespondierenden Löchern 6 versehen. Außerdem dient als Dichtung eine Einlage aus einem dauerplastischen Dichtungsstreifen 8. Im Innenbreich der Kabelmuffe sind nun ebenfalls Stützkörper 9 wie die bereits geschilderten profilierten Leisten 3 im Kabeleinführungsbereich 2 angeordnet, wobei diese hier neben der Stützung der flexiblen Folie 4 noch die Aufgabe haben, die Überlängen der Lichtwellenleiter 16 zu fixieren oder sie dienen als Klemmelemente mit Formausschnitten 10a zur Halterung von entsprechenden Einsätzen, wie zum Beispiel Spleißkassetten 14 für Lichtwellenleiter. Diese Formausschnitte 10a für Halterungen sind nahe der Symmetrielinie 11 der Muffe 1 angeordnet, so daß sich eine symmetrische Muffenform ausbilden läßt. Zusätzlich können auch noch weitere Leisten angeordnet werden bzw. andere Formausschnitte 10b gewählt werden, um beispielsweise Lichtwellenleiter 16 direkt fixieren zu können. Die profilierten Stützkörper, hier als profilierte Leisten 3 bzw. 9 ausgebildet, sind zumindest teilweise fest mit der flexiblen Folie 4 verbunden, weshalb diese auf der zum Muffeninneren zugewandten Seite mit einer haftvermittelnden Schicht, vorzugsweise aus einem Copolymer versehen ist.

Figur 2 zeigt die erfindungsgemäße Muffe 1 im geschlossenen Zustand, wobei hier besonders die Kabeleinführungsbereiche 2 deutlich werden. Durch die entsprechenden Formausschnitte 3a der als Stützkörper ausgebildeten profilierten Leisten 3 ergibt sich beim Zusammenfalten der Flexible Folie 4 beispielsweise die dargestellte Form. Die flexible Folie 4 wird in diesem Kabeleinführungsbereich straff aufgezogen und mit den Verschlußelementen, den auf die Schraubbolzen aufgezogenen Rändelmuttern 17 festgespannt. Die übrige Muffenform im mittleren Bereich paßt sich mehr oder weniger je nach Ausbildung und Füllung den inneren Einbauten an. Hier ist angedeutet, daß ein Lichtwellenleiter 16 gewissermaßen in einer Raumkurve im Inneren des Muffenraumes eingelegt und in den als profilierten Leisten 9 ausgebildeten Stützkörpern fixiert ist.

Die Figur 3 deutet nochmals an, daß durch verschiedene Formausschnitte 3a bei den profilierten Leisten 3 bzw. 9, die auf der flexiblen Folie 2 - 4 befestigt sind, die Muffenform, die sich nach dem Zusammenfalten der flexiblen Folie 2 - 4 ergibt, bestimmt werden kann.

Die Figur 4 verdeutlicht den Verschlußbereich entlang des Längsrandes 5, der insbesondere im Kabeleinführungsbereich 2 durch zusätzliche Verstärkungsschienen 18 versteift wird.

Die Figur 5 zeigt, daß für einen eventuellen Zugang des Muffenraumes nicht die gesamte Muffe 1 zerlegt werden muß, sondern daß es genügt, lediglich die Verschlußelemente im Mittelbereich des eigentlichen Muffenraumes zu entfernen. Nach dieser Maßnahme läßt sich die flexible Folie 4 nach auswärts zurückklappen wie bei einer Handtasche, so daß der Innenraum zugänglich wird. Die eingelegten und fixierten Spleißträger können dann bei spielsweise einzeln entnommen und wieder eingesetzt werden, wie die Pfeile andeuten.

Die Figur 6 zeigt nun eine Spleißkassette 14, wie sie für den Einsatz in der Muffe 1 gemäß der Erfindung eingesetzt werden kann. Diese Spleißkassette 14 besteht jeweils aus einem eigentlichen Spleißträger 27, der vorzugsweise als Tiefziehteil aus einer hierfür geeigneten Kunststoffolie, zum Beispiel aus Polyester, hergestellt wird. In entsprechende Führungsprofile 24, zum Beispiel Tiefziehausformungsprofile, können die Überlängen der Lichtwellenleiter eingefügt werden. Die eigentlichen Lichtwellenleiterspleiße werden in an sich bekannten Spleißhalterungen 25 auf dem Spleißträger 27 fixiert. Dieser Spleißträger 27 wird in eine kuvertähnlich gefaltete Aufnahmefolie 20, zum Beispiel aus Polyester, staub- und zumindest spritzwasserdicht eingesteckt, wobei als Verschluß an den Rändern Selbstklebestreifen 22, zum Beispiel aus einem dauerplastischen Material, angeordnet sind. Diese Aufnahmefolie 20 wird nun in eine Einstecktasche 19 eingeführt. Diese Einstecktasche 19 besitzt an seinen Rändern geriffelte Bereiche 23, durch die gewährleistet wird, daß die Selbstklebestreifen der Aufnahmefolie 20 beim Einschieben zusammengepreßt werden. Das Herausziehen der gefalteten Aufnahmefolie 20 zusammen mit dem Spleißträger 27 aus der in der Muffe verbleibenden Einstecktasche 19 ist durch Ziehen am überstehenden Rand leicht möglich. Nach erfolgter Reparatur oder Korrektur des Spleißbereiches wird die wieder verschlossene Aufnahmefolie 20 über die beiden angelaschten Zugstreifen 21, die außen an der Eisntecktasche geführt sind, wieder einwärts gezogen. Beim Hineinziehen bewirken die geriffelten Bereiche 23 eine Verstärkung der Dichtwirkung der Selbstklebestreifen 22, da diese beim Hineinziehen durch die Riffelung nochmals streifend zusammengepreßt werden. Bei der gewählten Anordnung können die Spleißträger 27 bzw. deren Aufnahmefolien in beliebiger Reihenfolge aus den einen Block bildenden Einstecktaschen geholt werden. Bei Entfernung des gesamten Blockes ist ein Zugriff zu den eventuell in den profilierten Leisten 9 eingelegten Lichtwellenleiterbündeln bzw. Lichtwellenleiter adern möglich.

Die Figur 7 zeigt die Einführung eines Lichtwellenleiterkabels oder Lichtwellenleiterbündels in die Aufnahmefolie 20. Im Bereich des Durchtrittes kann die Abdichtung über einen Streifen 28 aus dauerplastischem Material vorgenommen werden.

Die Figur 8 veranschaulicht in einer Skizze den Vorgang beim Herausziehen der Aufnahmefolien 20 aus den Einstecktaschen 19. Dabei kommt zum Ausdruck, daß erstere durch Ziehen an den Zugbändern 21 wieder an ihre geschützten Plätze zurückgeholt werden können.

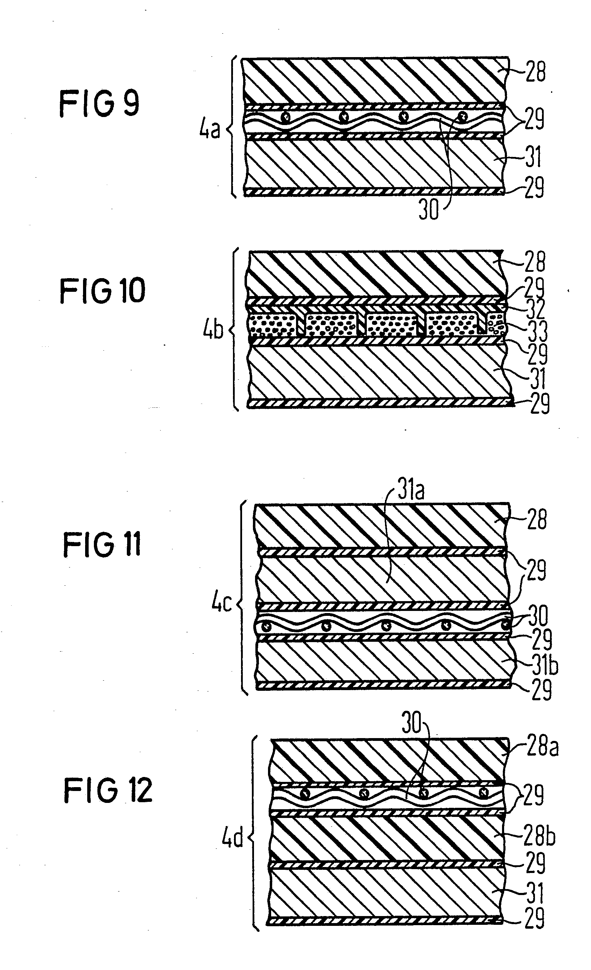

Anhand der folgenden Figuren 9 bis 12 werden nun einige Beispiele für den erfindungsgemäßen Aufbau einer für Umhüllungen verwendbaren flexiblen Folie beschrieben, wobei die Aufeinanderfolge und Anzahl der einzelnen Folienschichten in beliebiger Weise variiert werden können, ohne daß das Grundprinzip verändert wird.

So zeigt die Figur 9, daß die Folie 4a aus einer Deckschicht 28 aus Polyethylen mit einer nach innen weisenden Haftschicht 29 aus einem Copolymer, einer darunter folgenden Verstärkungsschicht 30 aus vorzugsweise in Kreuz- oder Geflechtform angeordneten Glasfasern und einer allseits mit einer Haftschicht 29 aus einem Copolymer umgebenen Metallfolie 31, vorzugsweise aus Stahl, besteht. Für die jeweilige Stärke der einzelnen Schichten sind folgende Werte unter Zugrundelegung der erforderlichen Eigenschaften besonders geeignet:

Deckschicht aus Kunststoff, vorzugsweise Polyethylen: $\leq$ 200 $\mu$m, vorzugsweise 150 $\mu$m

Haftschichten aus einem Copolymer, vorzugsweise Polyethylenacrylsäureester $\leq$ 50 $\mu$m, vorzugsweise $\leq$ 30 $\mu$m

Verstärkerschicht, vorzugsweise aus Glasfasern: $\leq$ 150 $\mu$m, vorzugsweise 120 $\mu$m

Metallfolie, vorzugsweise aus Stahl: $\leq$ 200 $\mu$m, vorzugsweise 150 $\mu$m

Diese Werte gelten für alle weiteren angegebenen Ausführungsbeispiele.

Die Figur 10 zeigt ein zweites Ausführungsbeispiel für eine flexible Folie 4b, bei der die Verstärkungsschicht durch ein Hohlraumprofil 32 mit einer Stärke von ca. 300 $\mu$m gebildet wird. Die einzelnen Hohlkammern dieses Hohlkammerprofils 32 sind mit einem Dichtungsmaterial 33, vorzugsweise einer Bitumendichtmasse ausgefüllt. Diese Ausführungsform hat den Vorteil, daß bei einer Stich- oder Schnittverletzung der als Umhüllung eingesetzten Folie 4b eine gewisse "Selbstheilung" eintritt, da das Dichtungsmaterial 33 die Verletzung dichtend ausfüllt und abschließt. Im übrigen sind die bereits beschriebenen Schichten vorgesehen.

In Figur 11 wird bei der flexiblen Folie 4c neben den bereits in Figur 9 beschriebenen Schichten eine weitere Metallfolie 31a, vorzugsweise ebenfalls aus Stahl, unterhalb der mit dem Copolymer beschichteten Deckfolie 28 eingebracht. Durch diese beiden eingelagerten Metallschichten 31a und 31b wird somit die mechanische Festigkeit erhöht, wobei die Flexibilität weitgehend erhalten bleibt.

In Figur 12 wird bei der flexiblen Folie 4d zusätzlich zu den in Figur 9 bereits beschriebenen Schichten eine weitere Kunststoffschicht 28b, vorzugsweise aus Polyethylen, zwischen der Verstärkungsschicht 30 und der Copolymerschicht 29 der Metallfolie 31 eingelagert.

Im übrigen kann die Aufeinanderfolge der einzelnen Schichten wie auch das Material der einzelnen Schichten entsprechend den Erfordernissen abgeändert werden. Die in den Figuren 9 bis 12 beschriebenen flexiblen Folien können in einfacher und durchaus üblicher Verfahrensweise als Halbzeug für Kabelmuffen hergestellt werden, die dann durch entsprechende Konfektionierung in der bereits oben erläuterten Weise zur Kabelmuffe gestaltet werden.

## Ansprüche

1. Längsgeteilte Muffe für Lichtwellenleiterkabel mit Anordnungen zur Unterbringung von Lichtwellenleiterüberlängen,
**dadurch gekennzeichnet,**
daß sie (1) aus einer flexiblen Folie (4), vorzugsweise aus mehreren Verbundschichten, besteht, daß Stützkörper (3, 9) innerhalb der zur Muffe (1) gefalteten Folie (4) angeordnet sind und daß die Stützkörper (9) innerhalb der Muffe (1) Aufnahmen für die Lichtwellenleiterüberlängen aufweisen.

2. Längsgeteilte Muffe nach Anspruch 1,
**dadurch gekennzeichnet,**
daß die Stützkörper (3, 9) aus profilierten und im Montagezustand die Muffenform bestimmenden Leisten (3,9) gebildet sind und daß die Stützkörper (3, 9) an der Folie (4) befestigt sind.

3. Längsgeteilte Muffe nach einem der vorhergehenden Ansprüche,
**dadurch gekennzeichnet,**
daß der Einführungsbereich (2) der Muffe (1) aus mindestens zwei parallelen Leisten (3) gebildet ist und daß zwischen ihnen ein in der Höhe überstehendes Dichtungsmaterial (13), vorzugsweise eine plastische Bitumendichtmasse, angeordnet ist.

4. Längsgeteilte Muffe nach einem der vorhergehenden Ansprüche,
**dadurch gekennzeichnet,**
daß eine Vielzahl von Verschlußelementen (7, 17) entlang der Muffenränder (5) zum Verschließen der Muffe (1) angeordnet sind.

5. Längsgeteilte Muffe nach Anspruch 4,
**dadurch gekennzeichnet,**
daß als Verschlußelement Schraubbolzen (7), vorzugsweise unverlierbar, und Rändelmuttern (17) im Verschlußbereich der Muffenränder (5) angeordnet sind und daß vorzugsweise im Kabeleinführungsbereich (2) Verstärkungsschienen (18) angeordnet sind.

6. Längsgeteilte Kabelmuffe nach einem der vorhergehenden Ansprüche,
**dadurch gekennzeichnet,**
daß die Profilierungen der Leisten (3, 9) durch verschiedenartige, quer zur Ausdehnung der Leisten (3, 9) gerichtete Formausschnitte (3a, 10, 10a, 10b) gebildet sind.

7. Längsgeteilte Kabelmuffe nach Anspruch 6,
**dadurch gekennzeichnet,**
daß angepaßte Formausschnitte (10b) zur Aufnahme von Lichtwellenleitern (16) in den Leisten (9, 12) im Inneren der Muffe (1) angeordnet sind.

8. Längsgeteilte Kabelmuffe nach einem der Ansprüche 6 oder 7,
**dadurch gekennzeichnet,**
daß angepaßte Formausschnitte (10a) zur Aufnahme von Lichtwellenleitersspleißkassetten (14) in den Leisten (9) im Inneren der Muffe (1) nahe dem Basisbereich entlang der Symmetrieachse (11) angeordnet sind.

9. Kabelmuffe nach einem der vorhergehenden Ansprüche,
**dadurch gekennzeichnet,**
daß die Lichtwellenleiterüberlängen (16) in den Profilierungen (10b) der Leisten (9) eingelegt sind.

10. Längsgeteilte Kabelmuffe nach einem der Ansprüche 1 bis 8,
**dadurch gekennzeichnet,**
daß die Lichtwellenleiterüberlängen (16) innerhalb einer Lichtwellenleitersspleißkassette (14) angeordnet sind.

11. Längsgeteilte Muffe nach Anspruch 10,
**dadurch gekennzeichnet,**
daß die Spleißkassette (14) besteht aus
    a. einem Spleißträger (27) mit Fixierungen (25) für Lichtwellenleitersspleiße und mit Lichtwellenleiterführungsprofilen (24) für die Lichtwellenleiterüberlängen
    b. einer kuvertähnlich gefalteten Aufnahmefolie (20) für die Lichtwellenleitersspleißträger (27)
    c. einer U-förmigen Einstecktasche (19) für die Aufnahmefolie (20).

12. Längsgeteilte Kabelmuffe nach Anspruch 11,
**dadurch gekennzeichnet,**
daß die Führungsprofile (24) als Tiefziehausformungen des Spleißträgers (27) gebildet sind.

13. Längsgeteilte Muffe nach Anspruch 11,
**dadurch gekennzeichnet,**
daß die Aufnahmefolie (20) aus einer Polyesterfolie besteht und entlang der Ränder Verschlußstreifen (22) aufweist, vorzugsweise Selbstklebestreifen.

14. Längsgeteilte Muffe nach Anspruch 13,
**dadurch gekennzeichnet,**
daß die Verschlußstreifen (22) aus dauerplastischem Material, vorzugsweise Bitumendichtmasse, bestehen.

15. Längsgeteilte Muffe nach Anspruch 11,
**dadurch gekennzeichnet,**

daß die Einstecktasche (19) aus Kunststoff, vorzugsweise aus Polyester besteht.

16. Längsgeteilte Muffe nach Anspruch 11,
**dadurch gekennzeichnet,**
daß die Einstecktasche (19) aus einem Metallblech, vorzugsweise aus korrosionsfestem Material wie Stahl, besteht.

17. Längsgeteilte Muffe nach einem der Ansprüche 11, 15 oder
**dadurch gekennzeichnet,**
daß die Einstecktasche (19) an den seitlichen Begrenzungen geriffelte Bereiche (23) aufweist.

18. Längsgeteilte Muffe nach einem der Ansprüche 11 bis 17,
**dadurch gekennzeichnet,**
daß die Einführungsbereiche (26) der Aufnahmefolie (20) für Lichtwellenleiterkabel (15) eine dauerplastische Dichtungseinlage (28), vorzugsweise aus Bitumendichtmasse, aufweisen.

19. Längsgeteilte Muffe nach einem der Ansprüche 11 bis 18,
**dadurch gekennzeichnet,**
daß die Aufnahmefolie (20) angelaschte Zugstreifen (21) aufweist.

20. Längsgeteilte Muffe nach einem der vorhergehenden Ansprüche,
**dadurch gekennzeichnet,**
daß die flexible Folie (4) im mittleren Bereich der Spleißaufnahme zwischen den beiden stirnseitigen Einführungsbereichen (2) nach Öffnen der diesem Bereich zugeordneten Verschlußelemente (7, 17) handtaschenartig nach auswärts aufklappbar ist.

21. Längsgeteilte Muffe nach einem der vorhergehenden Ansprüche,
**dadurch gekennzeichnet,**
daß die flexible Folie (4a) besteht aus:
    a. einer Deckschicht (28) aus polymerem Kunststoff, vorzugsweise aus Polyethylen
    b. einer darunter liegenden Haftschicht (29) aus einem Copolymer, vorzugsweise Polyethylenacrylsäureester
    c. einer Verstärkungsschicht (30), vorzugsweise aus Glasfasern
    d. einer darauf aufgebrachten, beiderseits mit einem Copolymer (29) vorzugsweise Polyethylenacrylsäureester, beschichteten Metallfolie (31), vorzugsweise aus Stahl.

22. Längsgeteilte Muffe nach einem der vorhergehenden Ansprüche,
**dadurch gekennzeichnet,**
daß die flexible Folie (4b) besteht aus:
    a. einer Deckschicht (28) aus polymerem Kunststoff, vorzugsweise Polyethylen
    b. einer darunter liegenden Haftschicht (29) aus einem Copolymer, vorzugsweise Polyethylenacrylsäureester
    c. einer Kunststoffolie, vorzugsweise aus Polyethylen, die ein flächenhaftes Hohlkammerprofil (32) aufweist, wobei die Hohlkammern mit einem plastischen Dichtungsmaterial (33), vorzugsweise aus Bitumendichtmasse, gefüllt sind.

d. einer darauf aufgebrachten, beidseitig mit einem Copolymer (29), vorzugsweise Polyethylenacrylsäureester beschichteten Metallfolie (31), vorzugsweise aus Stahl.

23. Längsgeteilte Muffe nach einem der Ansprüche 1 bis 20,
**dadurch gekennzeichnet,**
daß die flexible Folie (4c) besteht aus:

a. einer Deckfolie (28) aus polymerem Kunststoff, vorzugsweise Polyethylen

b. einer darunter angeordneten, beidseitig mit einem Copolymer (29), vorzugsweise Polyethylenacrylsäureester beschichteten ersten Metallfolie (31a), vorzugsweise aus Stahl

c. einer Verstärkungsschicht (30), vorzugsweise aus Glasfasern

d. einer weiteren beidseitig mit Copolymer (29), vorzugsweise Polyethylenacrylsäureester beschichteten zweiten Metallfolie (31b), vorzugsweise aus Stahl

24. Längsgeteilte Muffe nach einem der Ansprüche 1 bis 20,
**dadurch gekennzeichnet,**
daß die flexible Folie (4d) besteht aus:

a. einer Deckschicht (28a) aus einem polymeren Kunststoff, vorzugsweise Polyethylen

b. einer darunter liegenden Haftschicht (29) aus einem Copolymer, vorzugsweise Polyethylenacrylsäureester

c. einer Verstärkungsschicht (30), vorzugsweise aus Glasfasern

d. einer zweiten Haftschicht (29) aus einem Copolymer, vorzugsweise aus Polyethylenacrylsäureester

e. einer weiteren Kunststoffschicht (28b), vorzugsweise aus Polyethylen

f. einer abschließenden, beidseitig mit Copolymer (29), vorzugsweise aus Polyethylenacrylsäureester, beschichteten Metallfolie (31), vorzugsweise aus Stahl.

25. Längsgeteilte Muffe nach einem der Ansprüche 21 bis 24,
**dadurch gekennzeichnet,**
daß die Verstärkungsschicht (30) aus längsverlaufenden Verstärkungselementen, vorzugsweise Glasfasern, besteht.

26. Längsgeteilte Muffe nach einem der Ansprüche 21 bis 24,
**dadurch gekennzeichnet,**
daß die Verstärkungsschicht (30) aus längs- und querverlaufenden in Gitterform angeordneten Verstärkungselementen, vorzugsweise Glasfasern, besteht.

27. Längsgeteilte Muffe nach einem der Ansprüche 21 bis 24,
**dadurch gekennzeichnet,**
daß die Verstärkungsschicht (30) aus einem Gewebe, vorzugsweise aus Glasfasern, besteht.

28. Längsgeteilte Muffe nach einem der Ansprüche 21 bis 24,
**dadurch gekennzeichnet,**
daß die einzelnen Schichten der Folie (4a, 4b, 4c, 4d) jeweils folgende Stärken aufweisen:

Deckschicht (28) aus Kunststoff $\leq$ 200 $\mu$m, vorzugsweise 150 $\mu$m

Copolymerschicht (29) jeweils $\leq$ 50 $\mu$m, vorzugsweise 30 $\mu$m

Metallfolien (31, 31a, 31b) $\leq$ 200 $\mu$m, vorzugsweise 150 $\mu$m

Verstärkungsschicht (30) $\leq$ 150 $\mu$m, vorzugsweise 120 $\mu$m

Schicht als Hohlkammerprofil (32) $\leq$ 300 $\mu$m, vorzugsweise 300 $\mu$m.

FIG 1

FIG 2

# FIG 3

3a,10a

3,9    2,4

# FIG 4

5    18

17

2

# FIG 5

4    14    4

1

# FIG 7

22    20

28

15

26

# FIG 8

20

20    21

19

20

19    21

FIG 6

FIG 9

4a {

28
29
31
29
30

FIG 10

4b {

28
29
32
33
29
31
29

FIG 11

31a

4c {

28
29
30
29
31b
29

FIG 12

30

4d {

28a
29
28b
29
31
29